# EUROPEAN PATENT APPLICATION

(11) **EP 4 836 127 A1**
(43) Date of publication of application: **04.11.2026**
(21) Application number: 24909974.8
(22) Date of filing: 04.09.2024
(51) Int. Cl.: H01M 50/242

(54) **BATTERY TRAY ASSEMBLY, BATTERY PACK AND ELECTRIC DEVICE**

(30) Priority: 29.12.2023 CN 202323662280 U
(71) Applicant: BYD Company Limited, Shenzhen, Guangdong 518118 (CN)
(72) Inventor: FU, Jing, Shenzhen, Guangdong 518118 (CN); ZHU, Tingting, Shenzhen, Guangdong 518118 (CN); YANG, Lei, Shenzhen, Guangdong 518118 (CN); ZHANG, Haitao, Shenzhen, Guangdong 518118 (CN); MO, Kaizhi, Shenzhen, Guangdong 518118 (CN)
(74) Representative: Taor, Simon Edward William
(86) International application number: PCT/CN2024/116969
(87) International publication number: WO 2025/139028

(57) **Abstract**

A battery tray assembly, a battery pack, and an electrical device are disclosed. The battery tray assembly includes a battery tray and a reinforcing member. At least one end of the battery tray along a first direction is provided with a cavity, the cavity is located in the battery tray, and the reinforcing member is disposed in the cavity. In the first direction, a first gap is defined between a side of the cavity away from a center of the battery tray and the reinforcing member located in the cavity.

## Description

### CROSS-REFERENCE TO RELATED APPLICATIONS

The present disclosure claims priority to Chinese Patent Application No. 202323662280.6, filed with the China National Intellectual Property Administration on December 29, 2023, and entitled "BATTERY TRAY ASSEMBLY, BATTERY PACK, AND ELECTRICAL DEVICE", which is incorporated herein by reference in its entirety.

### TECHNICAL FIELD

The present disclosure relates to the field of battery technologies, and in particular, to a battery tray assembly, a battery pack, and an electrical device.

### BACKGROUND

In a related technology, a battery pack includes a tray and a top cover, and a battery cell is disposed in an accommodating cavity of the tray. However, the tray in the related technology has low rigidity and strength and a poor anti-collision capability. When subjected to an external impact, the tray is prone to damage, resulting in damage to the battery cell inside the tray. Consequently, safety performance of the battery pack is low.

### SUMMARY

An objective of the present disclosure is to provide a battery tray assembly, a battery pack, and an electrical device, to resolve the technical problems existing in a related technology.

To achieve the foregoing objective, according to a first aspect of the present disclosure, a battery tray assembly is provided. The battery tray assembly includes a battery tray and a reinforcing member. At least one end of the battery tray along a first direction is provided with a cavity, the cavity is located in the battery tray, and the reinforcing member is disposed in the cavity.

In the first direction, a first gap is defined between a side of the cavity away from a center of the battery tray and the reinforcing member located in the cavity.

Optionally, the cavity has a first wall and a second wall that are opposite to each other in a height direction of the battery tray, and the height direction is perpendicular to the first direction.

The reinforcing member is a corrugated member, and the reinforcing member is in contact with at least one of the first wall and the second wall.

Optionally, the reinforcing member has a wave crest portion and a wave trough portion.

The wave crest portion is in contact with the first wall, and/or the wave trough portion is in contact with the second wall.

Optionally, the wave crest portion is in surface contact with the first wall, and/or
the wave trough portion is in surface contact with the second wall.

Optionally, the first wall has a flat surface, the wave crest portion has a first flat surface, and the first flat surface is in surface contact with the flat surface of the first wall; and/or
the second wall has a flat surface, the wave trough portion has a second flat surface, and the second flat surface is in surface contact with the flat surface of the second wall.

Optionally, a width of the first flat surface is equal to a width of the second flat surface.

Optionally, the width of the first flat surface is from 1.2 mm to 5 mm; and/or
the width of the second flat surface is from 1.2 mm to 5 mm.

Optionally, a width of the wave crest portion is equal to a width of the wave trough portion, and a wave pitch of the reinforcing member is not greater than three times the width of the wave crest portion.

Optionally, the reinforcing member further has a first connecting portion and a second connecting portion, and a plurality of wave crest portions and a plurality of wave trough portions are provided;
one end of the first connecting portion is connected to one of two adjacent wave trough portions, and the other end of the first connecting portion is connected to a first side of the wave crest portion located between the two adjacent wave trough portions;
one end of the second connecting portion is connected to a second side of the wave crest portion located between the two adjacent wave trough portions, and the other end of the second connecting portion is connected to the other of the two adjacent wave trough portions; and
the first side and the second side are two sides of the wave crest portion in a width direction.

Optionally, the first connecting portion is disposed perpendicularly to the wave crest portion connected to the first connecting portion, and the first connecting portion is disposed perpendicularly to the wave trough portion connected to the first connecting portion; and/or
the second connecting portion is disposed at an obtuse angle to the wave crest portion connected to the second connecting portion, and the second connecting portion is disposed at an obtuse angle to the wave trough portion connected to the second connecting portion.

Optionally, an orthographic projection of the wave crest portion on a plane perpendicular to the height direction is wavy; and/or
an orthographic projection of the wave trough portion on the plane perpendicular to the height direction is wavy.

Optionally, the plurality of wave crest portions and the plurality of wave trough portions are provided; and
the plurality of wave crest portions and the plurality of wave trough portions are alternately arranged in sequence along a second direction, and the second direction intersects with the first direction.

Optionally, the first direction is one of a width direction and a length direction of the battery tray, and the second direction is the other of the width direction and the length direction of the battery tray.

Optionally, a material of the reinforcing member includes aluminum alloy.

Optionally, the reinforcing member includes a reinforcing member body and a cladding layer, the cladding layer clads an outer surface of the reinforcing member body, and the material of the reinforcing member body includes 3-series aluminum alloy.

Optionally, a material of the cladding layer includes 4-series aluminum alloy.

Optionally, a thickness of the reinforcing member is from 0.2 mm to 1 mm.

Optionally, a thickness of the cladding layer is 10% to 18% of the thickness of the reinforcing member.

Optionally, the reinforcing member is welded to the first wall, and/or the reinforcing member is welded to the second wall.

Optionally, the reinforcing member is brazed to the first wall, and/or the reinforcing member is brazed to the second wall.

Optionally, at least one end of the battery tray in the second direction is provided with the cavity, and the reinforcing member is disposed in the cavity; and
the second direction is perpendicular to the first direction.

Optionally, in the first direction, a second gap is defined between a side of the cavity close to the center of the battery tray and the reinforcing member located in the cavity.

Optionally, the first gap is larger than the second gap.

Optionally, a flow channel is further disposed in the battery tray, and along the first direction, the flow channel is located on one side of the cavity.

Optionally, in the first direction, two sides of the battery tray are each provided with the cavity, and the flow channel is located between the two cavities.

Optionally, the battery tray has an accommodating cavity for accommodating a battery cell; and
on a plane perpendicular to the first direction, an orthographic projection of a bottom wall of the flow channel away from a bottom wall of the accommodating cavity is located between an orthographic projection of a bottom wall of the cavity away from the bottom wall of the accommodating cavity and an orthographic projection of the bottom wall of the accommodating cavity.

Optionally, the battery tray includes a heat-conducting plate and a flow channel plate that are connected to each other, the heat-conducting plate includes a first heat-conducting part and a second heat-conducting part that are arranged along the first direction and connected, and the flow channel plate includes a first plate part and a second plate part that are arranged along the first direction and connected;
the flow channel is defined between the first heat-conducting part and the first plate part; and
the cavity is defined between the second heat-conducting part and the second plate part.

Optionally, the first heat-conducting part and the second heat-conducting part are integrally formed; and/or
the first plate part and the second plate part are integrally formed.

Optionally, the flow channel is not in communication with the cavity.

Optionally, the first plate part is provided with a first protrusion portion facing the first heat-conducting part, and the first protrusion portion is connected to the first heat-conducting part to separate the flow channel from the cavity.

Optionally, the first plate part is provided with a plurality of spaced second protrusion portions facing the first heat-conducting part, and the plurality of the second protrusion portions are all connected to the first heat-conducting part to define the flow channel.

Optionally, the second heat-conducting part includes a first bottom plate, a first side plate, and a first flanged edge that are arranged along the first direction and connected, the first side plate is connected to an end of the first bottom plate away from the first heat-conducting part, and the first flanged edge is connected to an end of the first side plate away from the first bottom plate;
the accommodating cavity is defined by the first heat-conducting part, the first bottom plate, and the first side plate, and the accommodating cavity is adapted to accommodate the battery cell;
the second plate part includes a second bottom plate, a second side plate, and a second flanged edge that are arranged along the first direction and connected; the second side plate is connected to an end of the second bottom plate away from the first plate part, and the second flanged edge is connected to an end of the second side plate away from the second bottom plate;
the cavity is defined by the first bottom plate, the second bottom plate, the first side plate, the second side plate, and the first protrusion portion; and
the first flanged edge is connected to the second flanged edge to close the cavity.

Optionally, the first bottom plate, the first side plate, and the first flanged edge are integrally formed; and/or
the second bottom plate, the second side plate, and the second flanged edge are integrally formed.

Optionally, the first bottom plate and the first side plate are connected by an arc; and/or
the first side plate and the first flanged edge are connected by an arc; and/or
the second bottom plate and the second side plate are connected by an arc; and/or
the second side plate and the second flanged edge are connected by an arc.

According to a second aspect of the present disclosure, a battery pack is provided. The battery pack includes a battery cell and the foregoing battery tray assembly, and the battery tray is provided with an accommodating cavity; and
the battery cell is disposed in the accommodating cavity.

According to a third aspect of the present disclosure, an electrical device is provided. The electrical device includes the foregoing battery pack.

In the present disclosure, the reinforcing member may be disposed in the cavity and may be arranged such that the first gap is defined between the reinforcing member and the side of the cavity away from the center of the battery tray. Provision of the reinforcing member can provide support for the cavity to a certain extent, thereby improving structural strength of the battery tray, and further improving overall rigidity and strength of the battery pack. Moreover, the reinforcing member and the first gap may serve to absorb energy and provide buffering, so that when the battery tray is subjected to an impact, the impact on the battery tray can be jointly absorbed by the reinforcing member and the first gap. This can enhance an anti-collision capability of the battery tray and the battery pack and reduce damage to the battery cell accommodated in the battery tray, thereby improving safety of the battery pack.

Other features and advantages of the present disclosure will be described in detail in the subsequent description of implementations.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is a schematic perspective view of a battery tray according to an implementation of the present disclosure;
FIG. 2 is a schematic exploded view of a battery tray according to an implementation of the present disclosure;
FIG. 3 is a partially enlarged schematic view of a position A in FIG. 2;
FIG. 4 is a schematic diagram of a three-dimensional structure of a battery tray with a heat-conducting plate omitted according to an implementation of the present disclosure, where a reinforcing member is shown;
FIG. 5 is a schematic diagram of a three-dimensional structure of a reinforcing member according to an implementation of the present disclosure;
FIG. 6 is a schematic diagram of a structure of a reinforcing member according to another implementation of the present disclosure;
FIG. 7 is a schematic top view of a battery tray according to an implementation of the present disclosure;
FIG. 8 is a schematic sectional view of FIG. 7 along a B-B direction;
FIG. 9 is a partially enlarged schematic view of a position C in FIG. 8;
FIG. 10 is a partially enlarged schematic view of position C in FIG. 8, where a reinforcing member is not shown;
FIG. 11 is a partially enlarged schematic view of a position D in FIG. 8;
FIG. 12 is a partial schematic sectional view of a reinforcing member according to an implementation of the present disclosure;
FIG. 13 is a schematic block diagram of a structure of a battery pack according to an implementation of the present disclosure; and
FIG. 14 is a schematic block diagram of a structure of an electrical device according to an implementation of the present disclosure.

### DESCRIPTION OF EMBODIMENTS

The following describes specific implementations of the present disclosure in detail with reference to the accompanying drawings. It should be understood that the specific implementations described herein are merely intended to describe and explain the present disclosure and are not intended to limit the present disclosure.

In the present disclosure, unless stated otherwise, positional terms such as "upper", "lower", "top", and "bottom" are generally defined with reference to the orientation of the corresponding drawings. Such terms are used merely to facilitate the description and simplification of the present disclosure, and do not indicate or imply that the referred device or element must have a specific orientation, or be constructed or operated in a specific positional manner, and therefore shall not be construed as a limitation on the present disclosure. The terms "inner" and "outer" refer to the interior and exterior of the contour of the corresponding component. Moreover, the terms "first", "second" and the like used herein are to distinguish one element from another, and do not indicate a sequence and importance.

In the description of the present disclosure, it should be further noted that, unless otherwise specified and limited, the terms "disposing", "connecting", "connection", and "mounting" should be understood in a broad sense, for example, may be a fixed connection, may be a detachable connection, or may be an integrated connection; or may be a direct connection, or may be an indirect connection through an intermediate medium. A person of ordinary skill in the art may understand specific meanings of the foregoing terms in the present disclosure based on a specific case.

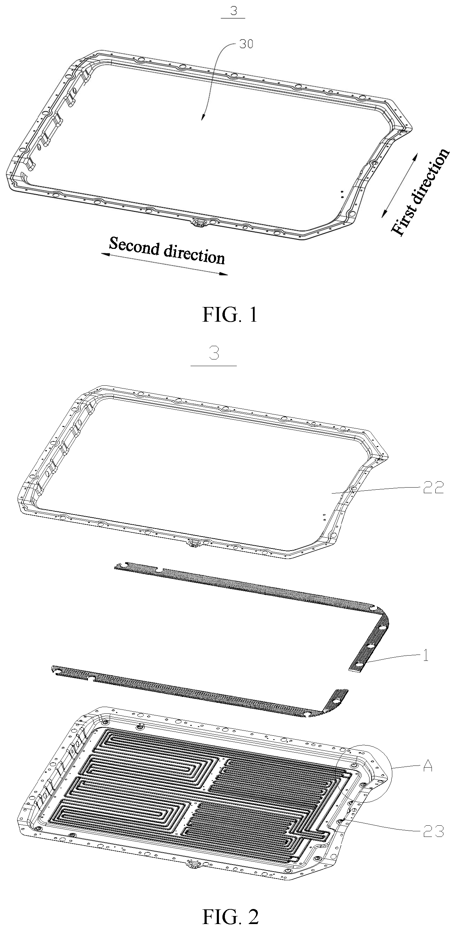

As shown in FIG. 1 to FIG. 14, according to a first aspect of the present disclosure, a battery tray assembly 2 is provided. The battery tray assembly 2 includes a battery tray 2 and a reinforcing member 1. At least one end of the battery tray 2 along a first direction is provided with a cavity 20. The cavity 20 is located in the battery tray 2, and the reinforcing member 1 is disposed in the cavity 20. In the first direction, a first gap 41 is defined between a side of the cavity 20 away from a center of the battery tray 2 and the reinforcing member 1 located in the cavity 20.

It should be noted that the cavity 20 may include a chamber located in a bottom plate and/or a side beam of the battery tray 2, rather than an accommodating cavity 30 on the battery tray 2 that is adapted to accommodate a battery cell 811.

In the present disclosure, the reinforcing member 1 may be disposed in the cavity 20 and arranged such that the first gap 41 is defined between the reinforcing member 1 and the side of the cavity 20 away from the center of the battery tray 2. Provision of the reinforcing member 1 may provide support for the cavity 20 to a certain extent, thereby improving structural strength of the battery tray 2, and further improving overall rigidity and strength of a battery pack 81. Moreover, the reinforcing member 1 and the first gap 41 may serve to absorb energy and provide buffering, so that when the battery tray 2 is subjected to an impact, the impact on the battery tray 2 can be jointly absorbed by the reinforcing member 1 and the first gap 41. This can enhance an anti-collision capability of the battery tray and the battery pack 81 and reduce damage to the battery cell 811 accommodated in the battery tray 2, thereby improving safety of the battery pack 81.

In addition, compared with a solid filling structure of a same volume, the reinforcing member 1 is lighter in weight. Providing the cavity 20 in the battery tray 2 and arranging the reinforcing member 1 in the cavity 20 have a little influence on the weight of the battery tray 2, thereby facilitating lightweighting of the battery pack 81.

Herein, the first direction may be any direction, for example, a width direction of the battery tray 2 or a length direction of the battery tray 2. This is not limited in the present disclosure. An example in which the first direction is the width direction of the battery tray 2 is used. Because the first gap 41 is farther from the center of the battery tray 2 than the reinforcing member 1 in the first direction, when the battery tray 2 is subjected to an impact from the width direction of the battery tray 2, the first gap 41 and the reinforcing member 1 can absorb the impact in sequence.

It should be understood that the center of the battery tray 2 may be a geometric center of the battery tray 2 or a position similar to the geometric center of the battery tray 2. A square battery tray 2 is used as an example, the center of the battery tray 2 may be a width center of the battery tray 2 in the first direction.

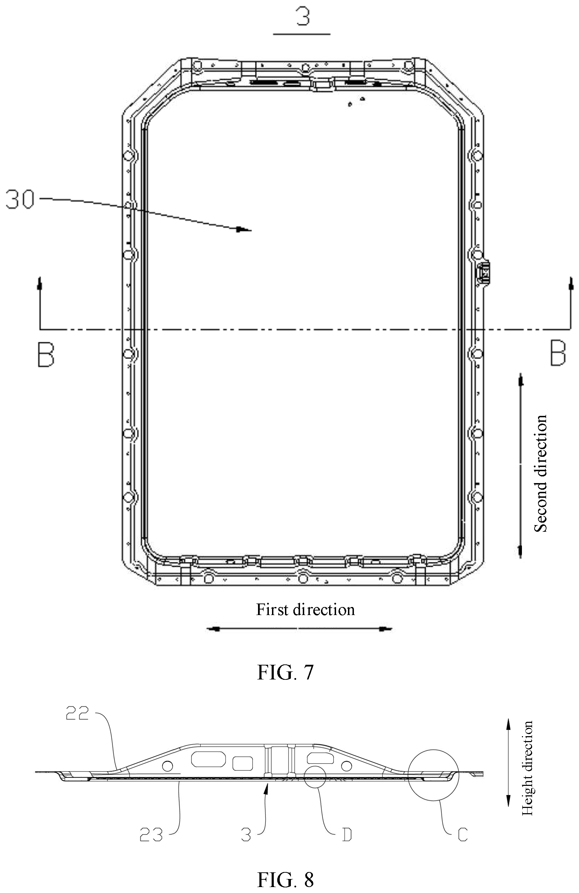

In the present disclosure, optionally, as shown in FIG. 8, the cavity 20 has a first wall 203 and a second wall 204 that are opposite to each other in a height direction of the battery tray 2. The height direction is perpendicular to the first direction. The reinforcing member 1 is a corrugated member, and the reinforcing member 1 is in contact with at least one of the first wall 203 and the second wall 204.

The reinforcing member 1 is in contact with the at least one of the first wall 203 and the second wall 204, to provide support for the cavity 20, thereby improving structural strength of the battery tray 2, and further improving overall rigidity and strength of the battery pack 81.

Moreover, because the reinforcing member 1 configured as the corrugated member exhibits excellent buffering capacity, when the battery tray 2 is subjected to an impact, damage to the battery cell 811 carried by the battery tray 2 can be reduced, thereby enhancing safety of the battery pack 81.

It should be understood that the height direction herein is a direction perpendicular to a plane on which the first direction is located, that is, a direction perpendicular to the length direction and the width direction of the battery tray 2. In other words, the height direction of the battery tray 2 may be consistent with a depth direction of the accommodating cavity 30 of the battery tray 2.

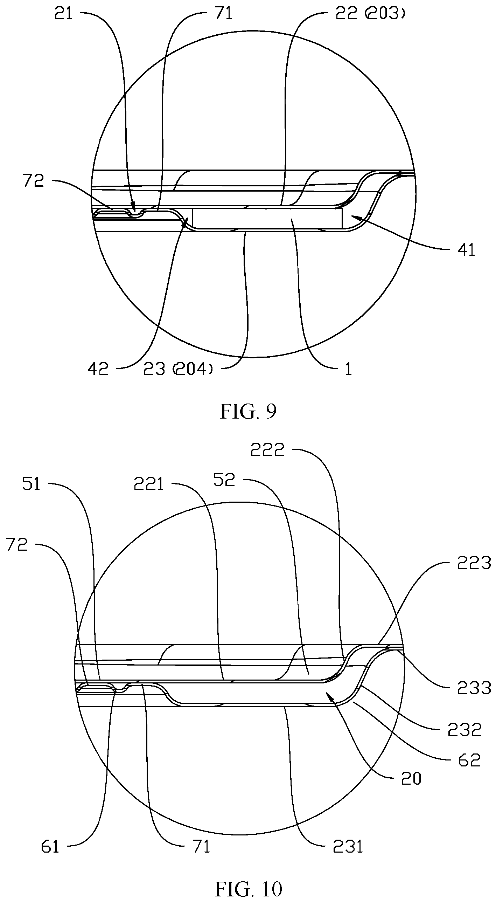

The present disclosure does not limit an arrangement manner of the reinforcing member 1. As an implementation, as shown in FIG. 9, the first wall 203 is adapted to support the battery cell 811, that is, the first wall 203 is a top wall of the cavity 20. In other words, the reinforcing member 1 may be in contact with the top wall and a bottom wall of the cavity 20. When the battery tray 2 is subjected to an impact from the bottom, the reinforcing member 1 can provide good support for the cavity 20 and absorb impact energy, thereby enhancing an ability of the battery tray 2 to withstand the impact applied from the bottom.

Herein, the first wall 203 may be a first bottom plate 221 to be described hereinafter, and the second wall 204 may be a second bottom plate 231 to be described hereinafter.

It should be understood that the "top" and "bottom" herein refer to the "top" and "bottom" of the battery pack 81 in a normal use state. For example, when the battery pack 81 is mounted on a vehicle, the bottom of the battery tray 2 may be a portion of the battery tray 2 close to the ground, that is, the bottom plate of the battery tray 2.

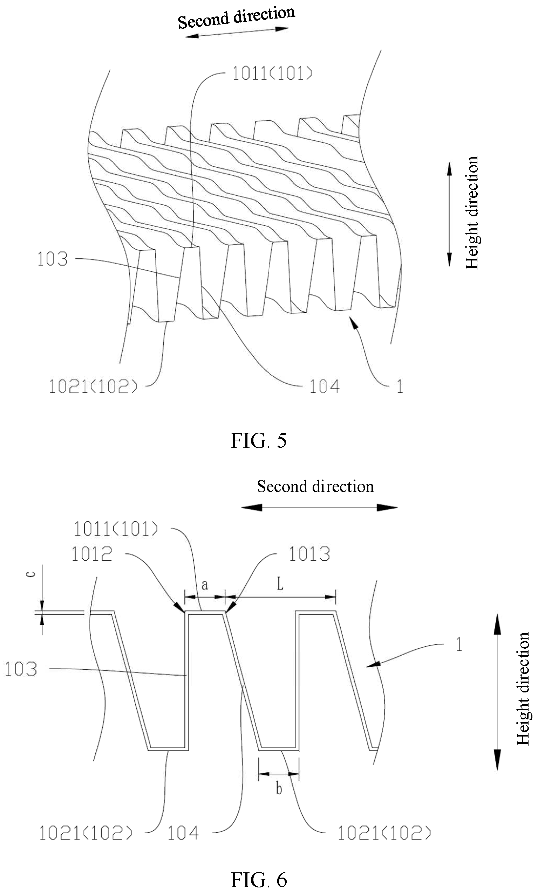

The reinforcing member 1 may be in contact with the first wall 203 and the second wall 204 at any appropriate portions. This is not limited in the present disclosure. As an implementation, as shown in FIG. 5 and FIG. 6, the reinforcing member 1 has a wave crest portion 101 and a wave trough portion 102. The wave crest portion 101 may be in contact with the first wall 203, and/or the wave trough portion 102 may be in contact with the second wall 204. For example, the wave crest portion 101 may be in contact with the top wall of the cavity 20, and the wave trough portion 102 may be in contact with the bottom wall of the cavity 20.

As another implementation, two ends of the reinforcing member 1 in the length direction or the width direction may be in contact with the first wall 203 and the second wall 204, respectively.

As another implementation, the reinforcing member 1 may alternatively be, but is not limited to, a foam member, a honeycomb structure, or a porous structure that has good strength and mechanical properties and provides effective buffering, energy absorption, and impact resistance. The foam member may be a plastic foamed member, such as PU (Polyurethane, polyurethane) or PP (polypropylene, polypropylene), or the foam member may be a metal foam member, such as aluminum foam or steel foam. The foam member has excellent toughness and strength. It should be understood that the reinforcing member 1 may alternatively be a combination of the foregoing examples, for example, a foam member filling gaps in the corrugated member, or the like. The present disclosure does not impose specific limitations.

In the present disclosure, as an implementation, the wave crest portion 101 may be in surface contact with the first wall 203, and the wave trough portion 102 may be in surface contact with the second wall 204. The surface contact can ensure connection reliability and increase a supporting surface area of the reinforcing member 1, thereby enabling the reinforcing member 1 to have a better supporting effect.

Optionally, as shown in FIG. 5 and FIG. 6, the first wall 203 has a flat surface, the wave crest portion 101 has a first flat surface 1011, and the first flat surface 1011 is in surface contact with the flat surface of the first wall 203; and/or the second wall 204 has a flat surface, the wave trough portion 102 has a second flat surface 1021, and the second flat surface 1021 is in surface contact with the flat surface of the second wall 204.

In other implementations of the present disclosure, the wave crest portion 101 may be in surface contact with the first wall 203 through an arc surface, and the wave trough portion 102 may also be in surface contact with the second wall 204 through an arc surface.

In addition, optionally, a width a of the first flat surface and a width b of the second flat surface may be equal, such that the first flat surface 1011 and the second flat surface 1021 can be used interchangeably, thereby enhancing efficiency of arranging the reinforcing member 1 in the cavity 20.

In the present disclosure, as an implementation, as shown in FIG. 7, the first direction may be one of the width direction and the length direction of the battery tray 2, and a second direction is the other of the width direction and the length direction of the battery tray 2, that is, the second direction may be perpendicular to the first direction.

Therefore, when the reinforcing member 1 is disposed in the cavity 20, the width a of the first flat surface and the width b of the second flat surface may be a width of the first flat surface 1011 and a width of the second flat surface 1021 along the second direction, respectively.

As another implementation of the present disclosure, the second direction may be inclined relative to the first direction, that is, the reinforcing member 1 may be disposed obliquely.

In addition, in an implementation in which the reinforcing member 1 is brazed to the first wall 203 and the second wall 204, the width of the first flat surface 1011 and the width of the second flat surface 1021 are equal, such that the two welding surfaces (that is, the first flat surface 1011 and the second flat surface 1021) require a same welding time during an integral brazing operation. Therefore, good connection strength can be achieved, after brazing, between the first flat surface 1011 and the first wall 203, and between the second flat surface 1021 and the second wall 204.

The present disclosure does not limit a specific width of the first flat surface 1011 and a specific width of the second flat surface 1021. As an implementation of the present disclosure, the width a of the first flat surface (for example, a left-to-right direction of a drawing plane in FIG. 6) may be from 1.2 mm to 5 mm, and/or the width b of the second flat surface (for example, the left-to-right direction of the drawing plane in FIG. 6) may be from 1.2 mm to 5 mm. Setting the width a of the first flat surface and the width b of the second flat surface within the foregoing ranges may enable the reinforcing member 1 to have an appropriate quantity of wave crest portions 101 and an appropriate quantity of wave trough portions 102 in limited space of the cavity 20, and also enable the wave crest portion 101 to have a sufficient surface contact area with the first wall 203 and the wave trough portion 102 to have a sufficient surface contact area with the second wall 204.

In addition, in the present disclosure, the width of the wave crest portion 101, the width of the wave trough portion 102, and a wave pitch L may have any appropriate ratio relationship. As an implementation of the present disclosure, the width of the wave crest portion 101 is equal to the width of the wave trough portion 102, and the wave pitch L of the reinforcing member 1 is not greater than three times the width of the wave crest portion 101. Such an arrangement can ensure that the reinforcing member 1 has sufficient supporting strength, so that the reinforcing member 1 can provide good support for the first wall 203 and the second wall 204. Herein, the width of the wave crest portion 101 may be equal to the width of the first flat surface 1011, and the width of the wave trough portion 102 may be equal to the width of the second flat surface 1021.

Optionally, as shown in FIG. 5 and FIG. 6, the reinforcing member 1 further has a first connecting portion 103 and a second connecting portion 104. A plurality of wave crest portions 101 and a plurality of wave trough portions 102 are provided. One end of the first connecting portion 103 is connected to one of two adjacent wave trough portions 102, and the other end of the first connecting portion 103 is connected to a first side 1012 of the wave crest portion 101 located between the two adjacent wave trough portions 102. One end of the second connecting portion 104 is connected to a second side 1013 of the wave crest portion 101 located between the two adjacent wave trough portions 102, and the other end of the second connecting portion 104 is connected to the other of the two adjacent wave trough portions 102. The first side 1012 and the second side 1013 are two sides of the wave crest portion 101 in the width direction.

It should be understood that the width direction of the wave crest portion 101 is a spacing direction between the plurality of wave crest portions 101, that is, the left-to-right direction of the drawing plane in FIG. 6. The width direction of the wave trough portion 102 is a spacing direction between the plurality of wave trough portions 102, that is, the left-to-right direction of the drawing plane in FIG. 6. For example, when the reinforcing member 1 is disposed in the cavity 20, the width of the wave crest portion 101 may be the width of the wave crest portion 101 along the second direction.

The first connecting portion 103 and the second connecting portion 104 may each be disposed at any appropriate angle to the wave crest portion 101 and the wave trough portion 102. This is not limited in the present disclosure. As an implementation, as shown in FIG. 6, the first connecting portion 103 is disposed perpendicularly to the wave crest portion 101 connected to the first connecting portion, and the first connecting portion 103 is disposed perpendicularly to the wave trough portion 102 connected to the first connecting portion; and/or
the second connecting portion 104 is disposed at an obtuse angle to the wave crest portion 101 connected to the second connecting portion, and the second connecting portion 104 is disposed at an obtuse angle to the wave trough portion 102 connected to the second connecting portion. Such an arrangement not only enables the reinforcing member 1 to provide good support for the first wall 203 and the second wall 204, but also can disperse a force transmitted from the reinforcing member 1 to the first wall 203 and the second wall 204.

As another implementation, the first connecting portion 103 is disposed perpendicularly to both the wave crest portion 101 and the wave trough portion 102 connected to the first connecting portion, and the second connecting portion 104 is disposed perpendicularly to both the wave crest portion 101 and the wave trough portion 102 connected to the second connecting portion.

As still another implementation, as shown in FIG. 5, the first connecting portion 103 is disposed at an obtuse angle to both the wave crest portion 101 and the corresponding wave trough portion 102, and the second connecting portion 104 is disposed at an obtuse angle to both the wave crest portion 101 and the corresponding wave trough portion 102.

Optionally, as shown in FIG. 5, an orthographic projection of the wave crest portion 101 on a plane perpendicular to the height direction may be wavy, and/or an orthographic projection of the wave trough portion 102 on the plane perpendicular to the height direction may be wavy. That is, each wave crest portion 101 is wavy in the length direction thereof, and/or each wave trough portion 102 is wavy in the length direction (a direction perpendicular to the drawing plane in FIG. 6) thereof. A wavy shape of the wave crest portion 101 can increase a contact area between the reinforcing member 1 and the first wall 203, thereby dispersing a force transmitted from the reinforcing member 1 to the first wall 203. Similarly, a wavy shape of the wave trough portion 102 can increase a contact area between the reinforcing member 1 and the second wall 204, thereby dispersing a force transmitted from the reinforcing member 1 to the second wall 204.

In addition, the wavy shape of both the wave crest portion 101 and the wave trough portion 102 can also enable the reinforcing member 1 to have higher rigidity and strength when bearing a force applied from the second wall 204 to the first wall 203, and allow more impact force to be absorbed during a collapse process.

Herein, it should be understood that the length direction of the wave crest portion 101 is perpendicular to the width direction of the wave crest portion 101, that is, the direction perpendicular to the drawing plane in FIG. 6; and the length direction of the wave trough portion 102 is perpendicular to the width direction of the wave trough portion 102, that is, the direction perpendicular to the drawing plane in FIG. 6.

In an implementation provided by the present disclosure, as shown in FIG. 5, projections of the first connecting portion 103 and the second connecting portion 104 on the plane perpendicular to the height direction may also be wavy, thereby further improving the buffering capacity and impact resistance of the reinforcing member 1.

The wave crest portions 101 and the wave trough portions 102 of the reinforcing member 1 may be provided in any appropriate quantity. This is not limited in the present disclosure. Optionally, as shown in FIG. 5 and FIG. 6, in an implementation of the present disclosure, the plurality of wave crest portions 101 and the plurality of wave trough portions 102 are provided. The plurality of wave crest portions 101 and the plurality of wave trough portions 102 are alternately arranged in sequence along the second direction, and the second direction intersects with the first direction. Such an arrangement can enable the reinforcing member 1 to have good strength and rigidity.

In other implementations of the present disclosure, the plurality of wave crest portions 101 and the plurality of wave trough portions 102 may also be alternately arranged in sequence along the first direction. This is not limited in the present disclosure.

The reinforcing member 1 may include any appropriate material. This is not limited in the present disclosure. Optionally, the material of the reinforcing member 1 may include aluminum alloy. On one hand, the aluminum alloy has a certain rigidity and strength, and can absorb an excessive impact force through deformation; on the other hand, the aluminum alloy is lighter in weight. In other words, the reinforcing member 1 made of aluminum alloy can have good performance.

In other implementations of the present disclosure, optionally, the material of the reinforcing member 1 may alternatively include stainless steel.

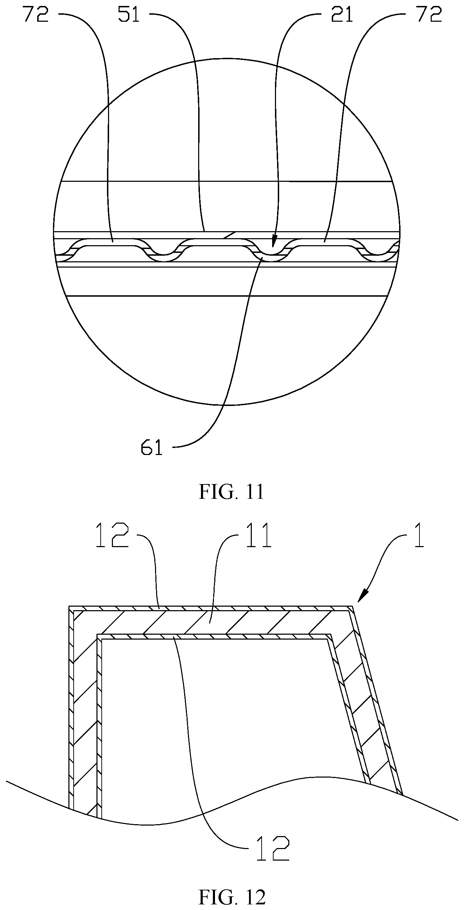

In the present disclosure, as shown in FIG. 12, the reinforcing member 1 may include a reinforcing member body 11 and a cladding layer 12. The cladding layer 12 clads an outer surface of the reinforcing member body 11, and the material of the reinforcing member body 11 may include 3-series aluminum alloy. The material of the reinforcing member body 11 includes the 3-series aluminum alloy, so that the reinforcing member 1 can have sufficient rigidity and strength, and a lighter weight.

In addition, in the implementation in which the reinforcing member 1 is brazed to the first wall 203 and the second wall 204, the cladding layer 12 may serve as a brazing flux between the reinforcing member body 11 and the first wall 203, and between the reinforcing member body 11 and the second wall 204.

Herein, optionally, the cladding layer 12 may clad the reinforcing member body 11 by roll cladding.

Optionally, the material of the cladding layer 12 may include 4-series aluminum alloy. Because a melting point of the 4-series aluminum alloy is close to and lower than that of the 3-series aluminum alloy, the 4-series aluminum alloy has good performance as the brazing flux for the 3-series aluminum alloy. Therefore, good connection strength can be achieved, after brazing, between the reinforcing member body 11 and the first wall 203, and between the reinforcing member body 11 and the second wall 204.

The reinforcing member 1 may have any appropriate thickness. This is not limited in the present disclosure. As an implementation, a thickness c of the reinforcing member may be from 0.2 mm to 1 mm, thereby enabling the reinforcing member 1 to have sufficient strength and rigidity, and a lighter weight.

The present disclosure also does not limit a thickness of the cladding layer 12. As an implementation, the thickness of the cladding layer 12 is 10% to 18% of a thickness of the reinforcing member 1. Therefore, sufficient connection strength can be achieved, after brazing, between the reinforcing member body 11 and the first wall 203, and between the reinforcing member body 11 and the second wall 204.

Herein, the thickness of the cladding layer 12 refers to the thickness of the cladding layer 12 on one side of the reinforcing member body 11 (that is, a thickness of a single cladding layer 12), and the thickness c of the reinforcing member is a sum of a thickness of the reinforcing member body 11 and thicknesses of the cladding layers 12 on two sides of the reinforcing member body 11.

As an implementation of the present disclosure, the wave pitch L of the reinforcing member 1 may be 5 mm, the width of the first flat surface 1011 and the width of the second flat surface 1021 may each be 1.3 mm, and the thickness of the reinforcing member 1 may be 0.2 mm. The thickness of the reinforcing member body 11 may be 0.1 mm, the material of the reinforcing member body 11 may be 3003 aluminum alloy, the thickness of the cladding layer 12 may be 0.05 mm, and the material of the cladding layer 12 may be 4045 aluminum alloy. Such a configuration can enable the reinforcing member 1 to have good rigidity and strength, and a lighter weight, and also have a sufficient contact area with the first wall 203 and the second wall 204. The reinforcing member 1 provides a good supporting effect particularly for the cavity 20 having a spacing of 9 mm between the first wall 203 and the second wall 204.

In the present disclosure, as an implementation, the reinforcing member 1 may be welded to the first wall 203, and/or the reinforcing member 1 may be welded to the second wall 204. Welding reliability is high, which can prevent the reinforcing member 1 from sliding in the cavity, thereby avoiding abnormal noise and wear of the cavity wall of the cavity 20.

The present disclosure does not limit a welding method between the reinforcing member 1 and the first wall 203, and between the reinforcing member 1 and the second wall 204. As another implementation of the present disclosure, the reinforcing member 1 may be brazed to the first wall 203, and/or the reinforcing member 1 may be brazed to the second wall 204. Brazing the reinforcing member 1 to the first wall 203 and the second wall 204 can achieve good connection strength between the reinforcing member 1 and the first wall 203, and between the reinforcing member 1 and the second wall 204, and cause small deformation of the first wall 203 and the second wall 204, that is, have a little influence on flatness of the battery tray 2.

As another implementation, the reinforcing member 1 may be connected to the first wall 203 and the second wall 204 by a structural adhesive.

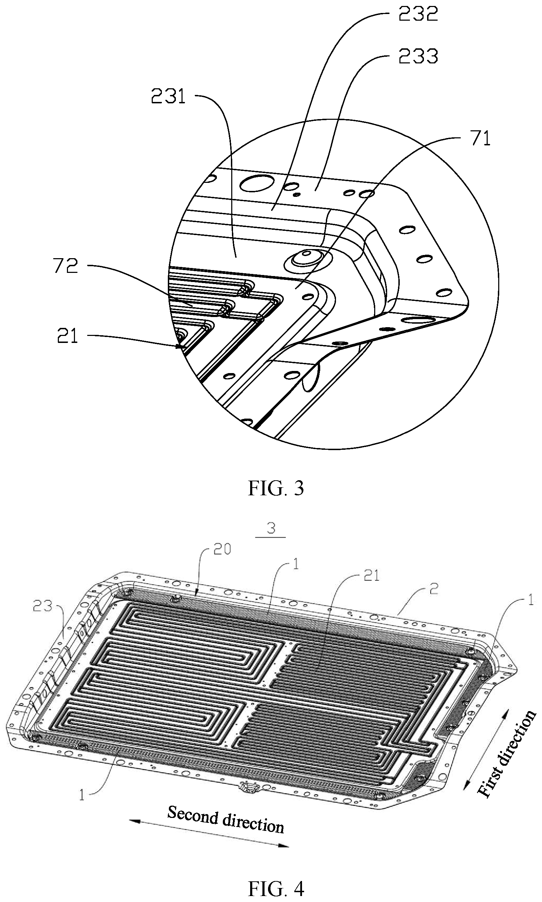

To enhance impact resistance of the battery tray 2, as an implementation, as shown in FIG. 4, at least one end of the battery tray 2 in the second direction is provided with the cavity 20, the reinforcing member 1 is disposed in the cavity 20, and the second direction is perpendicular to the first direction. Disposing the reinforcing member 1 in the foregoing cavity 20 can enhance the ability of the battery tray 2 to withstand the impact applied from the second direction.

It should be understood that in an implementation in which two ends of the battery tray 2 in the second direction are each provided with the cavity 20, the reinforcing member 1 may be disposed in each of the two cavities 20 of the battery tray 2 in the second direction.

In the present disclosure, referring to FIG. 4, the plurality of cavities 20 in the first direction and the second direction may enclose a closed annular region or an annular region with a notch, and impact resistance of the battery tray 2 is enhanced through the first gap 41 and the reinforcing member 1 disposed in the cavity 20.

Herein, the cavity 20 at one end of the battery tray 2 in the first direction and the cavity 20 at one end of the battery tray 2 in the second direction may be in communication. The plurality of reinforcing members 1 disposed in different cavities 20 may be connected to each other as a whole, thereby improving efficiency of mounting the reinforcing members 1 in the cavities 20.

Certainly, the cavity 20 at one end of the battery tray 2 in the first direction and the cavity 20 at one end of the battery tray 2 in the second direction may not be in communication. The plurality of reinforcing members 1 disposed in different cavities 20 may also not be connected to each other, thereby reducing processing costs of the reinforcing member 1.

In an implementation in which a flow channel 21 is disposed between a flow channel plate 23 and a heat-conducting plate 22, the reinforcing member 1 may be arranged around the flow channel 21. On one hand, the flow channel 21 may be positioned close to the middle of the heat-conducting plate 22, thereby helping improve heat exchange between the flow channel 21 and the battery cell 811. On the other hand, the reinforcing member 1 may protect a periphery of the flow channel 21.

To enhance lateral impact resistance of the battery tray 2, as an implementation, as shown in FIG. 9, in the first direction, a second gap 42 is defined between a side of the cavity 20 close to the center of the battery tray 2 and the reinforcing member 1 disposed in the cavity 20. That is, when the battery tray 2 is subjected to an impact, the first gap 41, the reinforcing member 1, and the second gap 42 provide a buffering effect, thereby effectively absorbing the impact on the battery tray 2.

As another implementation, the reinforcing member 1 may first be pressed into a shape matching the cavity 20 by a mold, and then the reinforcing member 1 may be arranged in the cavity 20 to make the reinforcing member 1 fully fill the cavity 20, thereby improving lateral impact resistance of the battery tray 2.

Optionally, the first gap 41 may be larger than the second gap 42, so that the reinforcing member 1 can be closer to the center of the battery tray 2 in the cavity 20, thereby helping improve the supporting effect of the reinforcing member 1 for the cavity 20.

In the present disclosure, optionally, the flow channel 21 may further be disposed in the battery tray 2, and along the first direction, the flow channel 21 is located on one side of the cavity 20. A heat exchange medium may be introduced into the flow channel 21 to realize cooling or heating of the battery cell 811 accommodated in the battery tray 2. Because the flow channel 21 is located on one side of the cavity 20, when the battery tray 2 is subjected to an impact from the first direction, the reinforcing member 1 and a gap (for example, the first gap 41) in the cavity 20 can protect the flow channel 21.

Herein, optionally, the cavity 20 may be in communication with the flow channel 21, that is, the heat exchange medium may also be introduced into the cavity 20.

As an implementation, as shown in FIG. 4, in the first direction, two sides of the battery tray 2 are each provided with the cavity 20, and the flow channel 21 is located between the two cavities 20, so that the two sides of the flow channel 21 can be protected by the reinforcing member 1 and the first gap 41.

To facilitate positioning of the reinforcing member 1 and increase arrangement space, as an implementation, as shown in FIG. 9 and FIG. 10, the battery tray 2 has the accommodating cavity 30 for accommodating the battery cell 811. On a plane perpendicular to the first direction, an orthographic projection of a bottom wall of the flow channel 21 away from a bottom wall of the accommodating cavity 30 is located between an orthographic projection of a bottom wall of the cavity 20 away from the bottom wall of the accommodating cavity 30 and an orthographic projection of the bottom wall of the accommodating cavity 30. In other words, in the height direction of the battery tray 2, the bottom wall of the flow channel 21 away from the bottom wall of the accommodating cavity 30 is located between the bottom wall of the cavity 20 away from the bottom wall of the accommodating cavity 30 and the bottom wall of the accommodating cavity 30, so that a height of the second wall 204 in the region corresponding to the cavity 20 is lower than the height of the bottom wall of the flow channel 21, thereby facilitating the positioning, that is, facilitating the arrangement of the reinforcing member 1 in the cavity 20, and at the same time, helping increase the arrangement space of the reinforcing member 1.

In an implementation of the present disclosure, as shown in FIG. 2 to FIG. 4 and FIG. 8 to FIG. 10, the battery tray 2 may include the heat-conducting plate 22 and the flow channel plate 23 that are connected to each other. The heat-conducting plate 22 includes a first heat-conducting part 51 and a second heat-conducting part 52 that are arranged along the first direction and connected, and the flow channel plate 23 includes a first plate part 61 and a second plate part 62 that are arranged along the first direction and connected. The flow channel 21 is defined between the first heat-conducting part 51 and the first plate part 61, and the cavity 20 is defined between the second heat-conducting part 52 and the second plate part 62. The heat-conducting plate 22 may be used to carry the battery cell 811. Because the flow channel 21 is disposed between the first heat-conducting part 51 and the first plate part 61, the flow channel 21 may exchange heat with the battery cell 811 through the heat-conducting plate 22.

It should be understood that in the implementation in which two ends of the battery tray 2 along the first direction are each provided with the cavity 20, the heat-conducting plate 22 may include two second heat-conducting parts 52 connected to the first heat-conducting part 51. Correspondingly, the flow channel plate 23 may include two second plate parts 62 connected to the first plate part 61. That is, the two second heat-conducting parts 52 are disposed opposite to each other in the first direction on the two sides of the first heat-conducting part 51, and the two second plate parts 62 are disposed opposite to each other in the first direction on the two sides of the first plate part 61.

To enable the heat-conducting plate 22 to have good strength, optionally, the first heat-conducting part 51 and the second heat-conducting part 52 may be integrally formed.

To enable the flow channel plate 23 to have good strength, optionally, the first plate part 61 and the second plate part 62 may be integrally formed.

It should be understood that in other implementations of the present disclosure, the first heat-conducting part 51 and the second heat-conducting part 52 may be designed separately, that is, may be processed independently. The first plate part 61 and the second plate part 62 may alternatively be designed separately, that is, processed independently. In this case, the flow channel 21 between the first heat-conducting part 51 and the first plate part 61 may be designed independently, and the cavity 20 between the second heat-conducting part 52 and the second plate part 62 may be designed independently, so that the flow channel 21 and the cavity 20 may be designed in a targeted manner based on heat exchange requirements and arrangement requirements of the reinforcing member 1, thereby facilitating heat exchange of the battery pack 81 and arrangement of the reinforcing member 1.

The present disclosure does not limit whether the flow channel 21 is in communication with the cavity 20. As an implementation, as shown in FIG. 4, the flow channel 21 may not be in communication with the cavity 20, so that the first gap has a good buffering capacity.

As other implementations of the present disclosure, the cavity 20 may alternatively be in communication with the flow channel 21, that is, the heat exchange medium may also be introduced into the cavity 20.

As an implementation, as shown in FIG. 9, the first plate part 61 is provided with a first protrusion portion 71 facing the first heat-conducting part 51, and the first protrusion portion 71 is connected to the first heat-conducting part 51 to separate the flow channel 21 from the cavity 20. Provision of the first protrusion portion 71 can prevent the heat exchange medium in the flow channel 21 from entering the cavity 20, facilitate design of the flow channel 21, facilitate control of a flow path of the heat exchange medium, and achieve a good heat exchange effect.

To improve the heat exchange effect between the heat exchange medium in the flow channel 21 and the heat-conducting plate 22, as an implementation, as shown in FIG. 11, the first plate part 61 is provided with a plurality of spaced second protrusion portions 72 facing the first heat-conducting part 51, and the plurality of second protrusion portions 72 are all connected to the first heat-conducting part 51 to define the flow channel 21. Because the flow channel 21 is jointly defined by the second protrusion portions 72 and the first heat-conducting part 51, the heat exchange medium in the flow channel 21 can be in direct contact with the first heat-conducting part 51, thereby improving the heat exchange effect between the heat exchange medium in the flow channel 21 and the heat-conducting plate 22.

Herein, optionally, the structure of the first protrusion portion 71 and the structure of the second protrusion portion 72 may be the same or different. This is not limited in the present disclosure.

In the present disclosure, as an implementation, as shown in FIG. 9 and FIG. 10, the second heat-conducting part 52 may include a first bottom plate 221, a first side plate 222, and a first flanged edge 223 that are arranged along the first direction and connected. The first side plate 222 is connected to an end of the first bottom plate 221 away from the first heat-conducting part 51, and the first flanged edge 223 is connected to an end of the first side plate 222 away from the first bottom plate 221. The accommodating cavity 30 is defined by the first heat-conducting part 51, the first bottom plate 221, and the first side plate 222, and the accommodating cavity 30 is adapted to accommodate the battery cell 811. The second plate part 62 includes a second bottom plate 231, a second side plate 232, and a second flanged edge 233 that are arranged along the first direction and connected. The second side plate 232 is connected to an end of the second bottom plate 231 away from the first plate part 61, and the second flanged edge 233 is connected to an end of the second side plate 232 away from the second bottom plate 231. The cavity 20 is defined by the first bottom plate 221, the second bottom plate 231, the first side plate 222, the second side plate 232, and the first protrusion portion 71. The first flanged edge 223 is connected (for example, in a stacked manner) to the second flanged edge 233 to close the cavity 20.

The bottom plate of the battery tray 2 can be jointly defined by the first heat-conducting part 51, the first bottom plate 221, the first plate part 61, and the second bottom plate 231. The side beam of the battery tray 2 can be jointly defined by the first side plate 222 and the second side plate 232. The flanged edge of the battery tray 2 can be jointly defined by the first flanged edge 223 and the second flanged edge 233. In this way, a ship-shaped battery tray can be constructed without separately machining the side beam and the flanged edge.

It should be understood that flanged edges (the first flanged edge 223 and the second flanged edge 233) of the battery tray 2 may be connected to an upper cover of the battery tray 2.

Optionally, the first bottom plate 221, the first side plate 222, and the first flanged edge 223 are integrally formed, and/or the second bottom plate 231, the second side plate 232, and the second flanged edge 233 are integrally formed. Such an arrangement can enable the heat-conducting plate 22 and/or the flow channel plate 23 to have good integrity, thereby improving assembly efficiency of the battery tray 2.

To enable both the heat-conducting plate 22 and the flow channel plate 23 to have higher strength, optionally, the material of each of the heat-conducting plate 22 and the flow channel plate 23 may include 6-series aluminum alloy.

Optionally, surfaces of the heat-conducting plate 22 and the flow channel plate 23 are each clad with the 3-series aluminum alloy, to facilitate brazing between the heat-conducting plate 22 and the flow channel plate 23, between the reinforcing member 1 and the heat-conducting plate 22, and between the reinforcing member 1 and the flow channel plate 23.

Optionally, as shown in FIG. 10, the first bottom plate 221 is connected to the first side plate 222 by an arc, and/or the first side plate 222 is connected to the first flanged edge 223 by an arc, and/or the second bottom plate 231 is connected to the second side plate 232 by an arc, and/or the second side plate 232 is connected to the second flanged edge 233 by an arc. An arc connection helps reduce stress concentration between the first bottom plate 221 and the first side plate 222, between the first side plate 222 and the first flanged edge 223, between the second bottom plate 231 and the second side plate 232, and between the second side plate 232 and the second flanged edge 233.

It should be understood that when two second heat-conducting parts 52 and two second plate parts 62 are provided as mentioned above, each second heat-conducting part 52 may include the first bottom plate 221, the first side plate 222, and the first flanged edge 223, and each second plate part 62 may include the second bottom plate 231, the second side plate 232, and the second flanged edge 233.

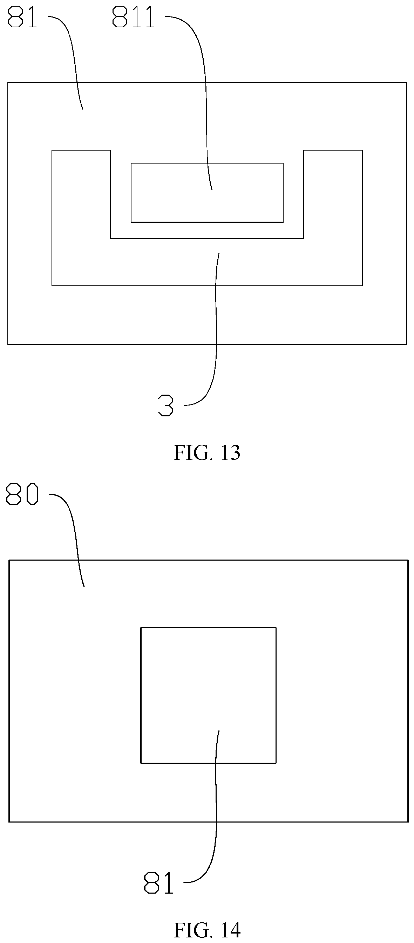

According to a second aspect of the present disclosure, as shown in FIG. 13, a battery pack 81 is provided. The battery pack 81 includes a battery cell 811 and the foregoing battery tray assembly 3. The battery tray 2 is provided with an accommodating cavity 30, and the battery cell 811 is disposed in the accommodating cavity 30.

According to a third aspect of the present disclosure, as shown in FIG. 14, an electrical device 80 is provided. The electrical device 80 includes the foregoing battery pack 81.

Herein, the electrical device 80 may be a vehicle, a mobile phone, a portable device, a notebook computer, a ship, a spacecraft, an electric toy, an electric tool, and the like. The vehicle may be a fuel vehicle, a gas-powered vehicle, or a new energy vehicle. The new energy vehicle may be a pure electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game machine, an electric car toy, an electric ship toy, and an electric airplane toy. The electric tool includes a metal cutting electric tool, a grinding electric tool, an assembly electric tool, and a railway electric tool, such as an electric drill, an electric grinding wheel, an electric wrench, an electric screwdriver, an electric hammer, an impact electric drill, a concrete vibrator, and an electric planer. This is not limited in the present disclosure.

Optionally, when the electrical device 80 is a vehicle, the battery pack 81 may be mounted on a vehicle body of the vehicle.

The preferred implementations of the present disclosure have been described in detail above with reference to the accompanying drawings; however, the present disclosure is not limited to the specific details in the above implementations. Within the scope of the technical concept of the present disclosure, a variety of simple modifications may be made to the technical solution of the present disclosure, and these simple modifications all belong to the protection scope of the present disclosure.

Moreover, it should be noted that various specific technical features described in the specific implementations described above can be combined in any suitable manner without contradiction, and to avoid unnecessary repetition, various possible combinations are not separately explained in the present disclosure.

In addition, the various different implementations of the present disclosure may also be combined in any manner, and the combination should also be considered as content disclosed in the present disclosure provided that the combination does not deviate from the idea of the present disclosure.

## Claims

1. A battery tray assembly (3), comprising:
a battery tray (2), wherein at least one end of the battery tray (2) along a first direction is provided with a cavity (20), and the cavity (20) is located in the battery tray (2); and
a reinforcing member (1), wherein the reinforcing member (1) is disposed in the cavity (20); wherein
in the first direction, a first gap (41) is defined between a side of the cavity (20) away from a center of the battery tray (2) and the reinforcing member (1) located in the cavity (20).

2. The battery tray assembly (3) according to claim 1, wherein the cavity (20) has a first wall (203) and a second wall (204) that are opposite to each other in a height direction of the battery tray (2), and the height direction is perpendicular to the first direction; and
the reinforcing member (1) is a corrugated member, and the reinforcing member (1) is in contact with at least one of the first wall (203) and the second wall (204).

3. The battery tray assembly (3) according to claim 2, wherein the reinforcing member (1) has a wave crest portion (101) and a wave trough portion (102); and
the wave crest portion (101) is in contact with the first wall (203), and/or the wave trough portion (102) is in contact with the second wall (204).

4. The battery tray assembly (3) according to claim 3, wherein the wave crest portion (101) is in surface contact with the first wall (203); and/or
the wave trough portion (102) is in surface contact with the second wall (204).

5. The battery tray assembly (3) according to claim 4, wherein the first wall (203) has a flat surface, the wave crest portion (101) has a first flat surface (1011), and the first flat surface (1011) is in surface contact with the flat surface of the first wall (203); and/or
the second wall (204) has a flat surface, the wave trough portion (102) has a second flat surface (1021), and the second flat surface (1021) is in surface contact with the flat surface of the second wall (204).

6. The battery tray assembly (3) according to claim 5, wherein a width of the first flat surface (1011) is equal to a width of the second flat surface (1021).

7. The battery tray assembly (3) according to claim 5 or 6, wherein the width of the first flat surface (1011) is from 1.2 mm to 5 mm; and/or
the width of the second flat surface (1021) is from 1.2 mm to 5 mm.

8. The battery tray assembly (3) according to any one of claims 3 to 7, wherein a width of the wave crest portion (101) is equal to a width of the wave trough portion (102), and a wave pitch of the reinforcing member (1) is not greater than three times the width of the wave crest portion (101).

9. The battery tray assembly (3) according to any one of claims 3 to 8, wherein the reinforcing member (1) further has a first connecting portion (103) and a second connecting portion (104), and a plurality of wave crest portions (101) and a plurality of wave trough portions (102) are provided;
one end of the first connecting portion (103) is connected to one of two adjacent wave trough portions (102), and the other end of the first connecting portion (103) is connected to a first side (1012) of the wave crest portion (101) located between the two adjacent wave trough portions (102); and
one end of the second connecting portion (104) is connected to a second side (1013) of the wave crest portion (101) located between the two adjacent wave trough portions (102), and the other end of the second connecting portion (104) is connected to the other of the two adjacent wave trough portions (102); wherein
the first side (1012) and the second side (1013) are two sides of the wave crest portion (101) in a width direction.

10. The battery tray assembly (3) according to claim 9, wherein the first connecting portion (103) is disposed perpendicularly to the wave crest portion (101) connected to the first connecting portion, and the first connecting portion (103) is disposed perpendicularly to the wave trough portion (102) connected to the first connecting portion; and/or
the second connecting portion (104) is disposed at an obtuse angle to the wave crest portion (101) connected to the second connecting portion, and the second connecting portion (104) is disposed at an obtuse angle to the wave trough portion (102) connected to the second connecting portion.

11. The battery tray assembly (3) according to any one of claims 3 to 10, wherein an orthographic projection of the wave crest portion (101) on a plane perpendicular to the height direction is wavy; and/or
an orthographic projection of the wave trough portion (102) on the plane perpendicular to the height direction is wavy.

12. The battery tray assembly (3) according to any one of claims 3 to 11, wherein the plurality of wave crest portions (101) and the plurality of wave trough portions (102) are provided; and
the plurality of wave crest portions (101) and the plurality of wave trough portions (102) are alternately arranged in sequence along a second direction, and the second direction intersects with the first direction.

13. The battery tray assembly (3) according to claim 12, wherein the first direction is one of a width direction and a length direction of the battery tray (2), and the second direction is the other of the width direction and the length direction of the battery tray (2).

14. The battery tray assembly (3) according to any one of claims 1 to 13, wherein a material of the reinforcing member (1) comprises aluminum alloy.

15. The battery tray assembly (3) according to claim 14, wherein the reinforcing member (1) comprises a reinforcing member body (11) and a cladding layer (12), the cladding layer (12) clads an outer surface of the reinforcing member body (11), and the material of the reinforcing member body (11) comprises 3-series aluminum alloy.

16. The battery tray assembly (3) according to claim 15, wherein a material of the cladding layer (12) comprises 4-series aluminum alloy.

17. The battery tray assembly (3) according to claim 15 or 16, wherein a thickness of the reinforcing member (1) is from 0.2 mm to 1 mm.

18. The battery tray assembly (3) according to any one of claims 15 to 17, wherein a thickness of the cladding layer (12) is 10% to 18% of the thickness of the reinforcing member (1).

19. The battery tray assembly (3) according to any one of claims 2 to 13, wherein the reinforcing member (1) is welded to the first wall (203), and/or the reinforcing member (1) is welded to the second wall (204).

20. The battery tray assembly (3) according to any one of claims 2 to 13, wherein the reinforcing member (1) is brazed to the first wall (203), and/or the reinforcing member (1) is brazed to the second wall (204).

21. The battery tray assembly (3) according to any one of claims 1 to 20, wherein at least one end of the battery tray (2) in the second direction is provided with the cavity (20), and the reinforcing member (1) is disposed in the cavity (20); and
the second direction is perpendicular to the first direction.

22. The battery tray assembly (3) according to any one of claims 1 to 21, wherein in the first direction, a second gap (42) is defined between a side of the cavity (20) close to the center of the battery tray (2) and the reinforcing member (1) located in the cavity (20).

23. The battery tray assembly (3) according to claim 22, wherein the first gap (41) is larger than the second gap (42).

24. The battery tray assembly (3) according to any one of claims 1 to 23, wherein a flow channel (21) is further disposed in the battery tray (2), and along the first direction, the flow channel (21) is located on one side of the cavity (20).

25. The battery tray assembly (3) according to claim 24, wherein in the first direction, two sides of the battery tray (2) are each provided with the cavity (20), and the flow channel (21) is located between the two cavities (20).

26. The battery tray assembly (3) according to claim 24 or 25, wherein the battery tray (2) has an accommodating cavity (30) for accommodating a battery cell (811); and
on a plane perpendicular to the first direction, an orthographic projection of a bottom wall of the flow channel (21) away from a bottom wall of the accommodating cavity (30) is located between an orthographic projection of a bottom wall of the cavity (20) away from the bottom wall of the accommodating cavity (30) and an orthographic projection of the bottom wall of the accommodating cavity (30).

27. The battery tray assembly (3) according to any one of claims 24 to 26, wherein the battery tray (2) comprises a heat-conducting plate (22) and a flow channel plate (23) that are connected to each other, the heat-conducting plate (22) comprises a first heat-conducting part (51) and a second heat-conducting part (52) that are arranged along the first direction and connected, and the flow channel plate (23) comprises a first plate part (61) and a second plate part (62) that are arranged along the first direction and connected;
the flow channel (21) is defined between the first heat-conducting part (51) and the first plate part (61); and
the cavity (20) is defined between the second heat-conducting part (52) and the second plate part (62).

28. The battery tray assembly (3) according to claim 27, wherein the first heat-conducting part (51) and the second heat-conducting part (52) are integrally formed; and/or
the first plate part (61) and the second plate part (62) are integrally formed.

29. The battery tray assembly (3) according to claim 28, wherein the flow channel (21) is not in communication with the cavity (20).

30. The battery tray assembly (3) according to claim 29, wherein the first plate part (61) is provided with a first protrusion portion (71) facing the first heat-conducting part (51), and the first protrusion portion (71) is connected to the first heat-conducting part (51) to separate the flow channel (21) from the cavity (20).

31. The battery tray assembly (3) according to claim 30, wherein the first plate part (61) is provided with a plurality of spaced second protrusion portions (72) facing the first heat-conducting part (51), and the plurality of second protrusion portions (72) are all connected to the first heat-conducting part (51) to define the flow channel (21).

32. The battery tray assembly (3) according to claim 31, wherein the second heat-conducting part (52) comprises a first bottom plate (221), a first side plate (222), and a first flanged edge (223) that are arranged along the first direction and connected; the first side plate (222) is connected to an end of the first bottom plate (221) away from the first heat-conducting part (51), and the first flanged edge (223) is connected to an end of the first side plate (222) away from the first bottom plate (221);
the accommodating cavity (30) is defined by the first heat-conducting part (51), the first bottom plate (221), and the first side plate (222), and the accommodating cavity (30) is adapted to accommodate the battery cell (811);
the second plate part (62) comprises a second bottom plate (231), a second side plate (232), and a second flanged edge (233) that are arranged along the first direction and connected; the second side plate (232) is connected to an end of the second bottom plate (231) away from the first plate part (61), and the second flanged edge (233) is connected to an end of the second side plate (232) away from the second bottom plate (231);
the cavity (20) is defined by the first bottom plate (221), the second bottom plate (231), the first side plate (222), the second side plate (232), and the first protrusion portion (71); and
the first flanged edge (223) is connected to the second flanged edge (233) to close the cavity (20).

33. The battery tray assembly (3) according to claim 32, wherein the first bottom plate (221), the first side plate (222), and the first flanged edge (223) are integrally formed; and/or
the second bottom plate (231), the second side plate (232), and the second flanged edge (233) are integrally formed.

34. The battery tray assembly (3) according to claim 32 or 33, wherein the first bottom plate (221) and the first side plate (222) are connected by an arc; and/or
the first side plate (222) and the first flanged edge (223) are connected by an arc; and/or
the second bottom plate (231) and the second side plate (232) are connected by an arc; and/or
the second side plate (232) and the second flanged edge (233) are connected by an arc.

35. A battery pack (81), comprising a battery cell (811) and the battery tray assembly (3) according to any one of claims 1 to 34, wherein the battery tray (2) is provided with an accommodating cavity (30); and
the battery cell (811) is disposed in the accommodating cavity (30).

36. An electrical device (80), comprising the battery pack (81) according to claim 35.
